# EUROPÄISCHE PATENTSCHRIFT

(11) **EP 3 808 161 B1**
(45) Veröffentlichungstag und Bekanntmachung des Hinweises auf die Patenterteilung: **12.07.2023**
(21) Anmeldenummer: 20201534.3
(22) Anmeldetag: 13.10.2020
(51) Int. Cl.: A01B 23/02

(54) **STRIEGELZINKEN FÜR BODENBEARBEITUNGSGERÄT**
HARROW TINES FOR EARTH WORKING IMPLEMENT
DENT DE RACLAGE POUR UN APPAREIL DE TRAVAIL DU SOL

(30) Priorität: 14.10.2019 DE 202019105649 U
(43) Veröffentlichungstag der Anmeldung: 21.04.2021
(73) Patentinhaber: Treffler Maschinenbau GmbH & Co. KG, 86554 Pöttmes-Echsheim (DE)
(72) Erfinder: TREFFLER, Paul, 86554 Pöttmes-Echsheim (DE)
(74) Vertreter: TBK

(56) Entgegenhaltungen:
- EP-A1- 2 415 336
- DE-A1-102005 040 175
- US-A- 1 912 477
- US-A1- 2019 307 050

## Beschreibung

Die Erfindung betrifft einen Striegelzinken für ein Bodenbearbeitungsgerät nach dem Oberbegriff des Anspruchs 1.

Ein derartiger Striegelzinken ist aus der DE 20 2010 011 146 U1 bekannt. Bei einem dort offenbarten Bodenbearbeitungsgerät zur Unkrautbekämpfung und Bodenlockerung sind an einem Tragrahmen mehrere in Reihen angeordnete Striegelzinken schwenkbar angeordnet und durch eine Feder in Richtung des Bodens vorgespannt. Die dort verwendeten Striegelzinken sind aus einen einzigen Drahtstück gebogen und weisen einen oberen Lagerschenkel zur drehbaren Lagerung an einem Tragrahmen und einen unteren Eindringteil zur Bearbeitung des Bodens auf. Derartige Striegelzinken sind jedoch aufgrund ihrer hohen Belastung besonders am unteren Eindringteil verschleißanfällig, was zu einer unerwünschten Verkürzung der Striegelzinken und einer dadurch bedingten Beeinträchtigung der Arbeitsqualität führen kann.

US 2019/307050 A1 zeigt einen konventionellen Striegelzinken gemäß dem Oberbegriff des Patentanspruchs 1 der vorliegenden Erfindung. Weitere konventionelle Striegelzinken sind in DE 10 2005 040 175 A1 und US 1 912 477 A gezeigt.

Aufgabe der Erfindung ist es, einen Striegelzinken für ein Bodenbearbeitungsgerät zu schaffen, der eine verbesserte Effektivität und erhöhte Lebensdauer aufweist.

Diese Aufgabe wird durch einen Striegelzinken mit den Merkmalen des Anspruchs 1 gelöst. Zweckmäßige Weiterbildungen und vorteilhafte Ausführungsformen der Erfindung sind Gegenstand der Unteransprüche.

Wesentliches Kernmerkmal der Erfindung ist, dass das Eindringteil eine Spitze aufweist, die zumindest in ihrem vorderen, also dem spitzen Bereich, mittels einer Erhebung verstärkt ist. Hierdurch wird gewährleistet, dass die Form der Spitze länger erhalten bleibt. Insbesondere der verschleißträchtige vorderste Bereich der Spitze wird durch die Erhebung deutlich verstärkt und die Widerstandsfähigkeit deutlich erhöht. Die Erhebung weist einen größeren Querschnitt als das plattenförmige Grundteil auf. Der optimale Querschnitt für das plattenförmige Grundteil und die Erhebung hängt auch vom Einsatzgebiet des Striegelzinkens ab.

Die Erhebung verläuft bevorzugt in Längsrichtung des Striegelzinkens. Wird ein längliches Grundteil verwendet, ist eine Erstreckung der Erhebung in Längsrichtung des Grundteils vorteilhaft. Das Grundteil muss jedoch nicht zwangsläufig eine längliche Gestalt haben. Zwar ist bei den meisten Einsatzgebieten eine längliche Form zu bevorzugen, aber dies ist nicht zwingend. Grundsätzlich kann das plattenförmige Grundteil somit auch andere Formen aufweisen, wesentlich ist dabei lediglich, dass es die genannte Spitze aufweist, die in den Boden eindringt und durch die Erhebung erheblich verstärkt ist. Weiterhin bewährt hat sich für die Spitze eine keilförmige Gestaltung, und für die Erhebung die Stegform.

Durch diese spezielle Kontur schleift sich das Grundteil im Bereich der stegförmigen Erhebung aufgrund des zusätzlichen Materials langsamer ab, so dass die Keilform der Spitze länger erhalten bleibt. Dadurch kann die Standzeit der Striegelzinken erhöht und die Arbeitsqualität verbessert werden. Die keilförmige Spitze kann einfacher in den Boden eindringen, so dass Krusten leichter gebrochen werden können. Außerdem kann durch die formbeständigere Keilform eine genauere Tiefenführung und ein verbessertes Spurverhalten aufgrund eines geringeren seitlichen Drucks erreicht werden. Ferner kann ein Verschmieren des Bodens vermieden und dadurch die Erosion verringert werden. Durch die spitze Form am unteren Ende des Eindringteils können die Pflanzen außerdem seitlich am Striegelzinken vorbeigeführt werden, so dass Pflanzenverluste minimiert werden können. Dies trägt zu einer deutlichen Verbesserung des Bearbeitungsergebnisses bei.

In einer besonders zweckmäßigen Ausführung steht die stegförmige Erhebung gegenüber einer in Bewegungsrichtung des Striegelzinkens weisenden Frontfläche des plattenförmigen Grundteils vor und ist in der Mitte des plattenförmigen Grundteils angeordnet. Die keilförmige Spitze ist vorzugsweise abgerundet und weist an ihrem unteren Ende einen Radius auf. Dadurch kann ein Aufspießen der Pflanzen vermieden werden.

Das Eindringteil kann über eine Anlagefläche an der zur Frontfläche entgegengesetzten Seite an einer Abflachung des Grundköpers anliegen. Dadurch kann eine stabile Befestigung des Eindringteils am Grundkörper erreicht werden. Eine gute Formstabilität des Eindringteils ist dadurch erreichbar, dass die Höhe h der stegförmigen Erhebung größer als die Dicke d des Grundteils ist. Das plattenförmige Grundteil des Eindringteils weist zweckmäßigerweise eine größere Breite als der Grundkörper auf.

Der Grundkörper ist vorzugsweise in einem Stück aus Federstahl gebogen und kann an seinem oberen Ende einen quer zur Längsrichtung rechtwinklig umgebogenen Lagerschenkel, einen stufenförmig gebogenen mittleren Bereich und einen schräg abgewinkelten unteren Endbereich aufweisen. Über den oberen Lagerschenkel kann der Grundkörper an einem Träger oder Traggestell eines Bodenbearbeitungsgeräts drehbar gelagert sein. Durch den stufenförmig gebogenen mittleren Teil wird der Striegelzinken abgekröpft, wodurch eine größere Durchgangshöhe erreicht werden kann. An dem mittleren Teil kann ein z.B. aus Gummi hergestelltes Federsicherungselement zur Verhinderung eines Abrutschens der Feder angeordnet sein.

In einer besonders verschleißfesten Ausführung ist das Eindringteil als gesondertes Bauteil aus Hartmetall oder einen anderen verschleißfesten Material ausgeführt. Dieses kann an dem Grundkörper angelötet, angeklebt oder auf andere geeignete Weise befestigt sein.

Weitere Besonderheiten und Vorzüge der Erfindung ergeben sich aus der folgenden Beschreibung eines bevorzugten Ausführungsbeispiels anhand der Zeichnung. Es zeigen:
- **Figur 1**: einen Striegelzinken in einer Perspektive;
- **Figur 2**: den Striegelzinken von Figur 1 in einer Seitenansicht;
- **Figur 3**: den Striegelzinken von Figur 1 in einer Ansicht in Richtung des Pfeils X von Figur 2;
- **Figur 4**: eine vergrößerte Schnittansicht entlang der Linie Y-Y von Figur 3;
- **Figur 5**: den Eindringteil des Striegelzinkens von Figur 1 in einer Vorderansicht;
- **Figur 6**: den Eindringteil des Striegelzinkens von Figur 1 in einer Seitenansicht und
- **Figur 7**: eine vergrößerte Darstellung des Eindringteils von Figur 5 in einer Draufsicht.

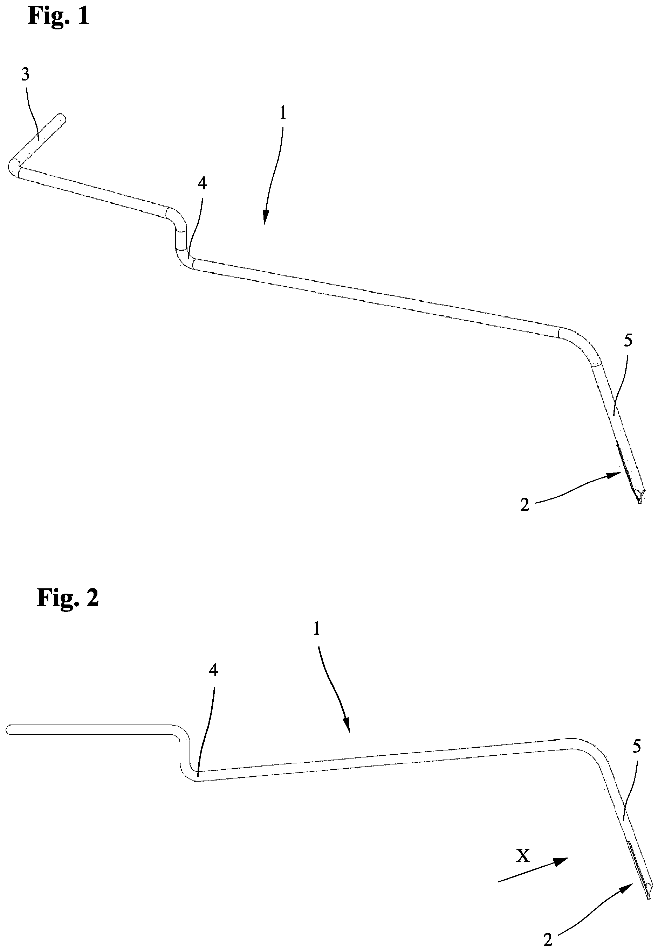

Der in den Figuren 1 bis 3 in verschiedenen Ansichten dargestellte Striegelzinken weist einen hier als Biegeteil aus Federstahldraht hergestellten Grundkörper 1 mit einem am unteren Ende des Grundkörpers 1 angeordneten Eindringteil 2 auf. Der gezeigte Striegelzinken kann zusammen mit weiteren entsprechenden Striegelzinken nebeneinanderliegend und in mehreren Reihen an einem Tragrahmen eines im landwirtschaftlichen Ackerbau für die Boden- und Saatbearbeitung, insbesondere zur Unkrautbekämpfung im ökologischen Pflanzenbau, eingesetzten Bodenbearbeitungsgeräts angeordnet sein.

Der in einem Stück aus Federstahl gebogene Grundkörper 1 weist an seinem oberen Ende einen quer zur Längsrichtung rechtwinklig umgebogenen Lagerschenkel 3, einen stufenförmig gebogenen mittleren Bereich 4 und einen schräg abgewinkelten unteren Endbereich 5 auf. Über den oberen Lagerschenkel 3 kann der Grundkörper 1 in einem hier nicht dargestellten Lagerteil schwenkbar gelagert sein. An der Abstufung im mittleren Bereich 4 kann eine Feder zur Vorspannung des Striegelzinkens in Richtung des Bodens angebracht sein. An dem stufenförmig gebogenen mittleren Bereich 4 des Grundkörpers 1 kann außerdem ein aus Gummi oder einem anderen geeigneten Material hergestelltes Federsicherungselement zur Verhinderung eines Abrutschens der Feder angeordnet werden. Eine mögliche Lagerung bzw. Anordnung des Grundkörpers 1 an einem Tragrahmen eines Bodenbearbeitungsgeräts ist in der DE 20 2010 011 146 U1 beschrieben. Bezüglich der Anordnung des Striegelzinkens an einem Tragrahmen oder Träger eines Bodenbearbeitungsgeräts wird auf den Offenbarungsgehalt dieser Druckschrift ausdrücklich Bezug genommen.

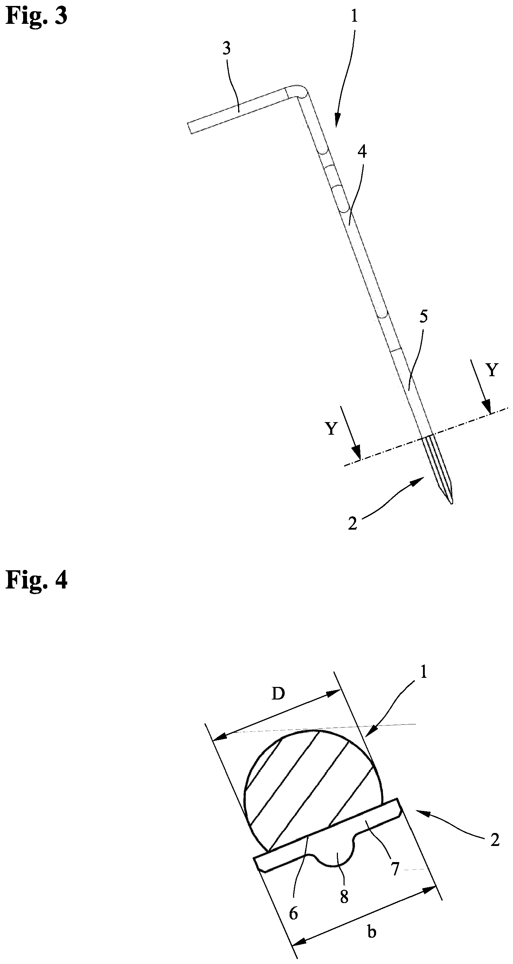

Das hier als gesondertes Bauteil ausgeführte untere Eindringteil 2 ist am unteren Ende des unteren Endbereich 5 des in einem Stück aus Federstahl gebogenen Grundkörpers 1 angelötet, angeklebt oder auf andere geeignete Weise befestigt. Hierzu wird an dem aus einem Rundprofil mit einem Durchmesser D von z.B. 8 mm bestehenden Grundkörper 1 in diesem Bereich eine in Figur 4 gezeigte Abflachung 6 vorgesehen. Durch eine z.B. durch Abfräsen oder dgl. hergestellte Abflachung 6 an dem Grundkörper 1 kann eine gute Auflagefläche für die Befestigung des Eindringteils 2 geschaffen werden. Für eine gute Halterung kann das hier plattenförmig ausgeführte Eindringteil 2 aber auch mit einem U-Profil oder einem anderen geeigneten Anschlussprofil versehen sein.

Aus Figur 4 geht hervor, dass das an dem Grundkörper 1 befestigte Eindringteil 2 ein plattenförmiges Grundteil 7 mit einer in Längsrichtung des Grundteils 1 verlaufenden Erhebung 8 aufweist. Das plattenförmige Grundteil 7 des Eindringteils 2 hat eine Breite b, die größer der Durchmesser D des aus einem Rundprofil bestehenden Grundköpers 1 ist. Bei einem Durchmesser D des Grundkörpers 1 von 8 mm kann das plattenförmige Grundteil 7 des Eindringteils 2 z.B. eine Breite b von 9 mm enthalten.

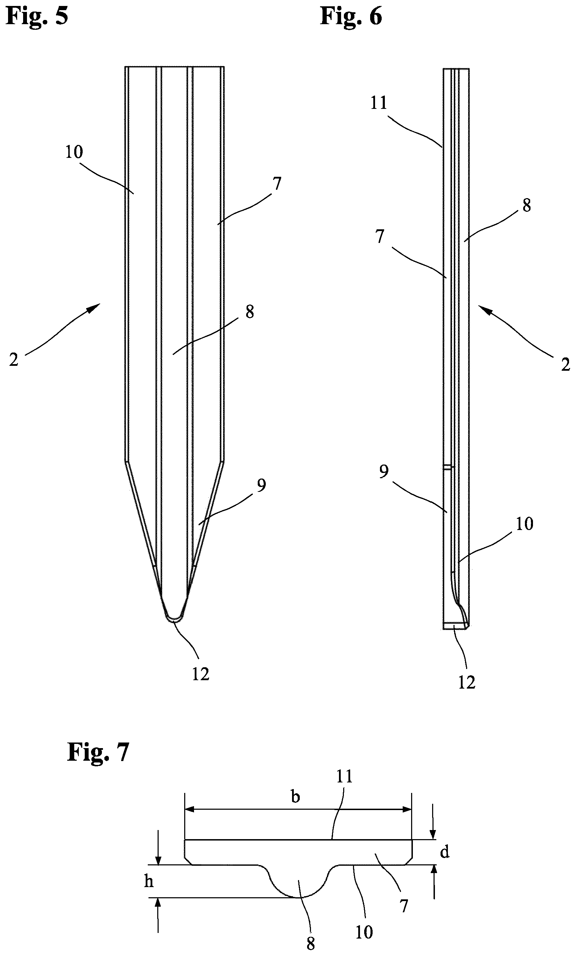

Wie besonders aus den Figuren 5 bis 7 ersichtlich ist, weist das Eindringteil 2 an dem plattenförmigen Grundteil 7 mit der in Längsrichtung verlaufenden, stegförmigen Erhebung 8 eine keilförmige Spitze 9 auf. Die stegförmige Erhebung 8 ist in der Mitte des plattenförmigen Grundteils 7 angeordnet und steht gegenüber einer in Bewegungsrichtung des Striegelzinkens weisenden Frontfläche 10 des plattenförmigen Grundteils 7 vor. Über eine Anlagefläche 11 an der zur Frontfläche 10 entgegengesetzten Seite liegt das plattenförmige Eindringteil 2 an der Abflachung 6 des Grundköpers 1 an.

In Figur 7 ist erkennbar, dass das plattenförmige Grundteil 7 zwischen der Frontfläche 10 und der Anlagefläche 11 eine Dicke d aufweist. In der gezeigten Ausführung weist das plattenförmige Grundteil 7 eine Dicke d von beispielsweise 1 mm auf. Die stegförmige Erhebung 9 steht um die Höhe h gegenüber der Frontfläche 10 vor. Der Betrag der Höhe h ist größer als die Dicke d. Bei einer Dicke d von 1 mm kann der Wert für die Höhe h z.B. 1,3 mm betragen. Bei der gezeigten Ausführung weist die stegförmige Erhebung 9 im Querschnitt eine Halbkreisform auf. Die keilförmige Spitze 8 enthält am unteren Ende einen Radius 12. Der Radius 12 am unteren Ende der keilförmigen Spitze 8 beträgt bei diesen Abmessungen z.B. 1,2 mm. Das Eindringteil 2 ist vorzugsweise aus Hartmetall oder einem anderen verschleißfesten Material hergestellt.

### Bezugszeichenliste

- 1: Grundkörper
- 2: Eindringteil
- 3: Lagerschenkel
- 4: Mittlerer Bereich
- 5: Unterer Endbereich
- 6: Abflachung
- 7: Grundteil
- 8: Erhebung
- 9: Spitze
- 10: Frontfläche
- 11: Anlagefläche
- 12: Radius

## Patentansprüche

1. Striegelzinken für ein Bodenbearbeitungsgerät mit einem Grundkörper (1) und einem am Grundkörper (1) angeordneten Eindringteil (2), wobei das Eindringteil (2) ein plattenförmiges Grundteil (7) mit einer Spitze (9) aufweist, die zumindest in ihrem vorderen Bereich, also dem spitzen Bereich der Spitze (9), mittels einer Erhebung (8) verstärkt ist, wobei die Erhebung (8) stegförmig ausgebildet ist und die Spitze (9) eine Keilform aufweist,
**dadurch gekennzeichnet, dass**
die Erhebung in dem vordersten Bereich der Spitze einen größeren Querschnitt als das plattenförmige Grundteil (7) aufweist, und
dass die Höhe h der stegförmigen Erhebung (8) größer als die Dicke d des Grundteils (7) ist.

2. Striegelzinken nach Anspruch 1, wobei der Querschnitt der Erhebung (8) im Wesentlichen halbkreisartig ist.

3. Striegelzinken nach einem der Ansprüche 1 bis 2, wobei sich die Erhebung (8) in Längsrichtung des Striegelzinkens und/oder in Längsrichtung des Grundteils (7) erstreckt.

4. Striegelzinken nach Anspruch 1, wobei die stegförmige Erhebung (8) in der Mitte des plattenförmigen Grundteils (7) angeordnet ist.

5. Striegelzinken nach einem der Ansprüche 1 bis 4, wobei die stegförmige Erhebung (8) gegenüber einer in Bewegungsrichtung des Striegelzinkens weisenden Frontfläche (10) des plattenförmigen Grundteils (7) vorsteht.

6. Striegelzinken nach Anspruch 5, wobei das Eindringteil (2) über eine Anlagefläche (11) an der zur Frontfläche (10) entgegengesetzten Seite an einer Abflachung (6) des Grundköpers (1) anliegt.

7. Striegelzinken nach einem der Ansprüche 1 bis 6, wobei das plattenförmige Grundteil (7) des Eindringteils (8) eine größere Breite b als der Grundkörper (1) aufweist.

8. Striegelzinken nach einem der Ansprüche 1 bis 7, wobei die keilförmige Spitze (9) an ihrem unteren Ende einen Radius (12) aufweist.

9. Striegelzinken nach einem der Ansprüche 1 bis 8, wobei das Eindringteil (2) als gesondertes Bauteil aus Hartmetall ausgeführt ist.

10. Striegelzinken nach einem der Ansprüche 1 bis 9, wobei der in einem Stück aus Federstahl gebogene Grundkörper (1) an seinem oberen Ende einen quer zur Längsrichtung rechtwinklig umgebogenen Lagerschenkel (3), einen stufenförmig gebogenen mittleren Bereich (4) und einen schräg abgewinkelten unteren Endbereich (5) enthält.

## Claims

1. Harrow tine for a soil cultivating device with a base body (1) and a penetrating part (2) arranged at the base body (1), wherein the penetrating part (2) comprises a plate-shaped base part (7) with a tip (9) which is reinforced at least at its front area, i.e. the pointed area of the tip (9), via an elevation (8), wherein the elevation (8) is formed web-shaped and the tip (9) comprises a wedge shape, **characterized in that**
the elevation in the most front area of the tip has a larger cross section than the plate-shaped base part (7), and
the height h of the web-shaped elevation (8) is larger than the thickness of the base part (7).

2. Harrow tine according to claim 1, wherein the cross section of the elevation (8) is substantially semicircular.

3. Harrow tine according to one of claims 1 to 2, wherein the elevation (8) extends in the longitudinal direction of the harrow tine and/or in the longitudinal direction of the base part (7).

4. Harrow tine according to claim 1, wherein the web-shaped elevation (8) is arranged at the center of the plate-shaped base part (7).

5. Harrow tines according to one of claims 1 to 4, wherein the web-shaped elevation (8) protrudes with respect to a front surface (10) of the plate-shaped base part (7) facing in the movement direction of the harrow tine.

6. Harrow tine according to claim 5, wherein the penetrating part (2) bears against a flattened portion (6) of the base body (1) via a bearing surface (11) on the side opposite to the front surface (10).

7. Harrow tine according to one of claims 1 to 6, wherein the plate-shaped base part (7) of the penetrating part (8) comprises a larger width b than the base body (1).

8. Harrow tine according to one of claims 1 to 7, wherein the wedge-shaped tip (9) comprises a radius (12) at its lower end.

9. Harrow tines according to one of claims 1 to 8, wherein the penetrating part (2) is implemented as a separate member made of hard metal.

10. Harrow tine according to one of claims 1 to 9, wherein the base body (1) bent in one piece from spring steel contains at its upper end a bearing leg (3) bent over at right angles transversely to the longitudinal direction, a step-shaped bent middle region (4) and an obliquely angled lower end region (5).

## Revendications

1. Dent de raclage pour un appareil de travail du sol avec un corps de base (1) et une partie de pénétration (2) agencée sur le corps de base (1), la partie de pénétration (2) présentant une partie de base (7) en forme de plaque avec une pointe (9) qui, au moins dans sa zone avant, c'est-à-dire la zone pointue de la pointe (9), est renforcée au moyen d'un bossage (8), le bossage (8) étant réalisé sous forme de nervure et la pointe (9) présentant une forme de coin,
**caractérisée en ce que**
le bossage présente dans la zone la plus avant de la pointe une section transversale plus grande que la partie de base (7) en forme de plaque,
et **en ce que** la hauteur h du bossage (8) en forme de nervure est supérieure à l'épaisseur d de la partie de base (7).

2. Dent de raclage selon la revendication 1, dans laquelle la section transversale du bossage (8) est essentiellement de type semi-circulaire.

3. Dent de raclage selon l'une quelconque des revendications 1 à 2, dans laquelle le bossage (8) s'étend dans la direction longitudinale de la dent de raclage et/ou dans la direction longitudinale de la partie de base (7).

4. Dent de raclage selon la revendication 1, dans laquelle le bossage (8) en forme de nervure est agencé au centre de la partie de base (7) en forme de plaque.

5. Dent de raclage selon l'une quelconque des revendications 1 à 4, dans laquelle le bossage (8) en forme de nervure fait saillie par rapport à une surface frontale (10) de la partie de base (7) en forme de plaque, orientée dans la direction de déplacement de la dent de raclage.

6. Dent de raclage selon la revendication 5, dans laquelle la partie de pénétration (2) s'applique sur un méplat (6) du corps de base (1) par l'intermédiaire d'une surface d'application (11) sur le côté opposé à la surface frontale (10).

7. Dent de raclage selon l'une quelconque des revendications 1 à 6, dans laquelle la partie de base (7) en forme de plaque de la partie de pénétration (8) présente une largeur b plus grande que le corps de base (1).

8. Dent de raclage selon l'une quelconque des revendications 1 à 7, dans laquelle la pointe (9) en forme de coin présente un rayon (12) à son extrémité inférieure.

9. Dent de raclage selon l'une quelconque des revendications 1 à 8, dans laquelle la partie de pénétration (2) est réalisée sous forme de composant séparé en métal dur.

10. Dent de raclage selon l'une quelconque des revendications 1 à 9, dans laquelle le corps de base (1), plié en une seule pièce en acier à ressort, contient à son extrémité supérieure une branche de palier (3) repliée à angle droit transversalement à la direction longitudinale, une zone médiane (4) pliée en gradins et une zone d'extrémité inférieure (5) coudée en oblique.
